# EUROPEAN PATENT SPECIFICATION

(11) **EP 4 567 346 B1**
(45) Date of publication and mention of the grant of the patent: **02.12.2026**
(21) Application number: 23854885.3
(22) Date of filing: 14.08.2023
(51) Int. Cl.: F24H 15/148, F24H 1/18, F24H 15/215, F24H 15/219, F24H 15/258, G05D 23/19

(54) **FLOW RATE ESTIMATION DEVICE, FLOW RATE ESTIMATION METHOD, AND PROGRAM**
VORRICHTUNG ZUR FLUSSRATENSCHÄTZUNG, VERFAHREN ZUR FLUSSRATENSCHÄTZUNG UND PROGRAMM
DISPOSITIF D'ESTIMATION DE DÉBIT, PROCÉDÉ D'ESTIMATION DE DÉBIT ET PROGRAMME

(30) Priority: 19.08.2022 JP 2022131090
(43) Date of publication of application: 11.06.2025
(73) Proprietor: Mitsubishi Heavy Industries Thermal Systems, Ltd., Tokyo 100-8332 (JP)
(72) Inventor: NISHIKAWA Naoki, Tokyo 100-8332 (JP); KUROIWA Toru, Tokyo 100-8332 (JP)
(74) Representative: Cabinet Beau de Loménie
(86) International application number: PCT/JP2023/029458
(87) International publication number: WO 2024/038851

(56) References cited:
- CA-A1- 2 915 954
- JP-A- 2015 206 496
- JP-A- 2020 165 608
- JP-A- H0 387 562
- JP-A- H04 177 047
- US-A1- 2014 343 888
- DATABASE COMPENDEX [online] ENGINEERING INFORMATION, INC., NEW YORK, NY, US; 1 October 2018 (2018-10-01), PIROW N O ET AL: "Non-invasive estimation of domestic hot water usage with temperature and vibration sensors", XP093312437, Database accession no. E20183105619133
- PIROW N O ET AL: "Non-invasive estimation of domestic hot water usage with temperature and vibration sensors", FLOW MEASUREMENT AND INSTRUMENTATION 20181001 ELSEVIER LTD GBR, vol. 63, 1 October 2018 (2018-10-01), pages 1 - 7, DOI: 10.1016/J.FLOWMEASINST.2018.07.003

## Description

### Technical Field

The present disclosure relates to a flow rate estimation device, a flow rate estimation method, and a program. The present disclosure claims priority based on Japanese Patent Application No. 2022-131090, filed in Japan on August 19, 2022.

### Background Art

A hot water supply system is used to supply hot water to kitchens and bath facilities of restaurants, hotels, schools, hospitals, welfare facilities, and the like. In the hot water supply system, a water heater heats supplied water and stores the heated hot water in a hot water storage tank. Then, the hot water stored in the hot water storage tank is supplied to the kitchens, bath facilities, and the like. For efficient operation of the hot water supply system, a method of creating a hot water storage plan that can predict future demand for hot water and avoid hot water outage while satisfying daily demand prediction has been proposed (for example, PTL 1). In order to create such a hot water storage plan, it is essential to accurately predict the demand for hot water. For example, in a case where a sensor that measures the flow rate of hot water supplied from a hot water storage tank to a facility on the demand side is provided in the hot water supply system, the demand prediction can be performed by recording the daily flow rate measured by the sensor and learning the recorded data. PTL 2 discloses a water heater control system for controlling a water heater including a cylindrical water storage tank and at least one heating element arranged to heat water in the water storage tank. A model is suitably used to estimate internal water temperatures of the tank, as well as the (unmeasured) water draw flow rate and temperature. PTL 3 discloses a hot water supply apparatus for determining the operation time of the next day according to the hot water storage amount in a hot water storage tank. PTL 4 discloses a method of measuring the amount of energy consumed from a water heater having a tank with two or more temperature sensors located in the tank. The energy usage is recorded with chronological information to construct a usage pattern which can be used for controlling the heater and for providing the user with details of energy usage. PTL 5 discloses domestic water heaters in which a flow rate estimation is performed using vibration data. A linear approximation is used to relate vibration standard deviation to volumetric flow rate and a positive displacement flow meter is used to provide reference data during experiments.

### Citation List

### Patent Literature

[PTL 1] Japanese Unexamined Patent Application Publication No. 2021-181852
[PTL2] Canadian Patent Application CA2915954A1
[PTL 3] Japanese Patent Application JPH0387562A
[PTL 4] US Patent Application US2014/343888A1
[PTL 5] DATABASE COMPENDEX ENGINEERING INFORMATION,
   INC., NEW YORK, NY, US; 1 October 2018 (2018-10-01), PIROW N O ET AL: "Noninvasive estimation of domestic hot water usage with temperature and vibration sensors", XP093312437, Database accession no. E20183105619133 ; & PIROW N O ET AL: "Non-invasive estimation of domestic hot water usage with temperature and vibration sensors", FLOW MEASUREMENT AND INSTRUMENTATION 20181001 ELSEVIER LTD GBR, vol. 63, 1 October 2018 (2018-10-01), pages 1-7, DOI: 10.1016/J.FLOWMEASINST.2018.07.003.

### Summary of Invention

### Technical Problem

As described above, there is a hot water supply system in which a sensor that measures the amount of hot water supplied from the hot water storage tank is not provided. In such a hot water supply system, it is not possible to perform demand prediction on the basis of the amount of hot water measured by the sensor. A method of estimating the amount of hot water supplied from the hot water supply system in which the sensor for measuring the amount of hot water is not provided, to the facility is required.

The present disclosure provides a flow rate estimation device, a flow rate estimation method, and a program capable of solving the problems described above. Solution to Problem

A flow rate estimation device according to an aspect of the present disclosure is a flow rate estimation device that estimates a flow rate of hot water supplied from a hot water supply system including a heat source machine and a hot water storage tank that stores hot water created by the heat source machine, the flow rate estimation device including a flow rate estimation unit configured to estimate an inflow rate of hot water to the hot water storage tank, from a first temperature that is a temperature of water flowing into the heat source machine, a second temperature that is a temperature of hot water supplied from the heat source machine to the hot water storage tank, and a heating capacity of the heat source machine calculated on a basis of the first temperature, the second temperature, and an outside air temperature, and to estimate a flow rate of hot water supplied from the hot water storage tank, from the inflow rate and a change in a hot water storage amount of the hot water storage tank. The flow rate estimation device comprises a correction unit configured to derive a function for obtaining an actually measured value of the flow rate of hot water, from the estimated value of the flow rate of hot water estimated by the flow rate estimation unit, and to correct the estimated value of the flow rate of hot water estimated by the flow rate estimation unit, on a basis of the function, and a storage unit configured to store the estimated value of the flow rate of hot water and the actual measured value of the flow rate of hot water in association with each other. The correction unit is configurated to create a scatter graph on the basis of the estimated values and the actually measured values of the flow rate of hot water recorded in the storage unit, to calculate a first function for calculating the estimated value from the actual value based on the scatter graph, and to derive an inverse function of the first function as the function.

A flow rate estimation method according to another aspect of the present disclosure is a flow rate estimation method of estimating a flow rate of hot water supplied from a hot water supply system including a heat source machine and a hot water storage tank that stores hot water created by the heat source machine, the flow rate estimation method including estimating an inflow rate of hot water to the hot water storage tank, from a first temperature that is a temperature of water flowing into the heat source machine, a second temperature that is a temperature of hot water supplied from the heat source machine to the hot water storage tank, and a heating capacity of the heat source machine calculated on a basis of the first temperature, the second temperature, and an outside air temperature, and estimating a flow rate of hot water supplied from the hot water storage tank, from the inflow rate and a change in a hot water storage amount of the hot water storage tank. The flow rate estimation method comprising a step of deriving a function for obtaining an actually measured value of the flow rate of hot water, from the estimated value of the flow rate of hot water estimated by the flow rate estimating step, and a step of correcting the estimated value of the flow rate of hot water estimated by the flow rate estimating step, on a basis of the function. The correcting step creates a scatter graph on the basis of the estimated values and the actually measured values of the flow rate of hot water recorded in a storage unit that stores the estimated value of the flow rate of hot water and the actual measured value of the flow rate of hot water in association with each other, calculates a first function for calculating the estimated value from the actual value based on the scatter graph, and derives an inverse function of the first function as the function.

A program according to another aspect of the present disclosure is a program for causing a computer to execute processing of estimating a flow rate of hot water supplied from a hot water supply system including a heat source machine and a hot water storage tank that stores hot water created by the heat source machine, the processing including estimating an inflow rate of hot water to the hot water storage tank, from a first temperature that is a temperature of water flowing into the heat source machine, a second temperature that is a temperature of hot water supplied from the heat source machine to the hot water storage tank, and a heating capacity of the heat source machine calculated on a basis of the first temperature, the second temperature, and an outside air temperature, and estimating a flow rate of hot water supplied from the hot water storage tank, from the inflow rate and a change in a hot water storage amount of the hot water storage tank. The processing comprising a step of deriving a function for obtaining an actually measured value of the flow rate of hot water, from the estimated value of the flow rate of hot water estimated by the flow rate estimating step, and a step of correcting the estimated value of the flow rate of hot water estimated by the flow rate estimating step, on a basis of the function. The correcting step creates a scatter graph on the basis of the estimated values and the actually measured values of the flow rate of hot water recorded in a storage unit that stores the estimated value of the flow rate of hot water and the actual measured value of the flow rate of hot water in association with each other, calculates a first function for calculating the estimated value from the actual value based on the scatter graph, and derives an inverse function of the first function as the function.

### Advantageous Effects of Invention

According to the flow rate estimation device, the flow rate estimation method, and the program described above, it is possible to estimate the flow rate of hot water supplied from the hot water supply system to the load.

### Brief Description of Drawings

Fig. 1 is a diagram illustrating an example of a hot water supply system according to each embodiment.
Fig. 2 is a block diagram illustrating an example of a flow rate estimation device according to a first embodiment.
Fig. 3 is a diagram illustrating a flow rate estimation method according to the first embodiment.
Fig. 4 is a diagram illustrating an example of a characteristic table of a heat source machine according to the first embodiment.
Fig. 5 is a block diagram illustrating an example of a flow rate estimation device according to a second embodiment.
Fig. 6 is a diagram illustrating correction processing of a flow rate according to the second embodiment.
Fig. 7 is a diagram illustrating an example of a relationship between a corrected flow rate estimated value and an actually measured value according to the second embodiment.
Fig. 8 is a flowchart illustrating an example of flow rate estimation processing according to the second embodiment.
Fig. 9 is a block diagram illustrating an example of a flow rate estimation device according to a third embodiment.
Fig. 10 is a diagram illustrating an example of property information according to the third embodiment.
Fig. 11 is a diagram illustrating a selection method of similar properties according to the third embodiment.
Fig. 12 is a diagram illustrating correction processing according to the third embodiment.
Fig. 13 is a flowchart illustrating an example of flow rate estimation processing according to the third embodiment.
Fig. 14 is a block diagram illustrating an example of a flow rate estimation device according to a fourth embodiment.
Fig. 15 is a flowchart illustrating an example of flow rate estimation processing according to the fourth embodiment.
Fig. 16 is a diagram illustrating an example of a hardware configuration of the flow rate estimation device according to each embodiment.

### Description of Embodiments

### <First Embodiment>

Hereinafter, a flow rate estimation method of the present disclosure will be described with reference to the drawings.

### (System Configuration)

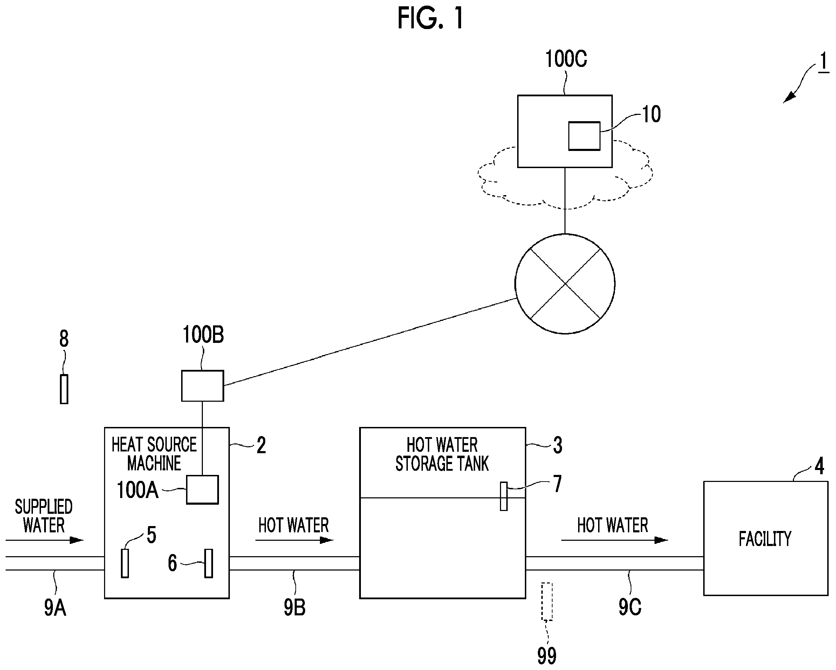

Fig. 1 is a diagram illustrating an example of a hot water supply system according to each embodiment.

As illustrated in the figure, a hot water supply system 1 includes a heat source machine 2, a hot water storage tank 3, a facility 4, an edge server 100B, and a cloud server 100C. The heat source machine 2 and the hot water storage tank 3 are connected to each other by a pipe 9B, and the hot water storage tank 3 and the facility 4 are connected to each other by a pipe 9C. Supplied water is supplied to the heat source machine 2 through a pipe 9A. The heat source machine 2 includes, for example, a refrigerant circuit including a compressor, a condenser, an expansion valve, and an evaporator, and exchanges heat using the condenser to heat supplied water and to generate hot water. A temperature sensor 5 that measures the temperature of the supplied water is provided on an inlet side of the heat source machine 2, and a temperature sensor 6 that measures the temperature of the heated hot water, that is, the temperature of the hot water to be supplied to the hot water storage tank 3 is provided on an outlet side of the heat source machine 2. In Fig. 1, only one heat source machine 2 is illustrated, but a plurality of heat source machines 2 may be provided. One or a plurality of heat source machines 2 send the generated hot water to the hot water storage tank 3 through the pipe 9B. The hot water storage tank 3 stores the sent hot water. A water level sensor 7 that measures a hot water storage amount is provided in the hot water storage tank 3. A controller 100A is provided in the heat source machine 2, and the controller 100A controls the heat source machine 2 such that the hot water storage amount measured by the water level sensor 7 becomes a target value. Then, the hot water in an amount corresponding to the demand of the facility 4 is supplied from the hot water storage tank 3 to the facility 4 through the pipe 9C. The hot water supply system 1 is provided with a sensor 8 that measures an outside air temperature.

The controller 100A, the edge server 100B, and the cloud server 100C are computers including a processor. The controller 100A and the edge server 100B, and the edge server 100B and the cloud server 100C are connected to be able to communicate with each other. The cloud server 100C is a server that is provided outside a facility in which the heat source machine 2 and the hot water storage tank 3 are provided, for example, is present in a data center. The cloud server 100C performs the demand prediction of hot water, creation of a hot water storage plan in which the hot water storage amount of the hot water storage tank 3 is determined for each predetermined time, and the like. For example, a method of the demand prediction and a creation method of the hot water storage plan are disclosed in PTL 1. The edge server 100B is disposed in a facility in which the heat source machine 2 or the like is provided, and performs mediation between the controller 100A and the cloud server 100C, such as transmitting information (measured values of various sensors or the like) related to the heat source machine 2 and the hot water storage tank 3 to the cloud server 100C and receiving the hot water storage plan from the cloud server 100C.

Here, the pipe 9C is not provided with a flow rate sensor 99 that measures the amount of hot water to be supplied to the facility 4. Therefore, in the first embodiment, the measured values of the sensors 5 to 8 are acquired, and the flow rate of hot water to be supplied to the facility 4 through the pipe 9C is estimated. Then, the cloud server 100C performs the demand prediction of hot water on the basis of the estimated flow rate, and calculates a target value (hot water storage plan) of the hot water storage amount in accordance with the demand prediction. Then, the controller 100A operates the heat source machine 2 on the basis of the hot water storage plan. In a second embodiment and subsequent embodiments, the flow rate sensor 99 is illustrated by a broken line in Fig. 1 in order to describe an application example in a case where the flow rate sensor 99 is provided. The first embodiment relates to the method of measuring (estimating) the flow rate of hot water flowing through the pipe 9C in the same manner as the flow rate sensor 99 even without the flow rate sensor 99, but it is possible to apply the flow rate estimation method of the first embodiment even in a case where the flow rate sensor 99 is provided.

### (Configuration of Flow Rate Estimation Device)

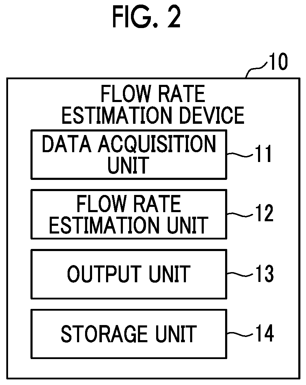

Next, a flow rate estimation device that estimates the flow rate of hot water will be described with reference to Fig. 2.

Fig. 2 is a block diagram illustrating an example of the flow rate estimation device according to each embodiment.

A flow rate estimation device 10 illustrated in the drawing is mounted on any of the controller 100A, the edge server 100B, and the cloud server 100C. As an example, Fig. 1 illustrates a configuration in which the cloud server 100C includes the flow rate estimation device 10. As illustrated in Fig. 2, the flow rate estimation device 10 includes a data acquisition unit 11, a flow rate estimation unit 12, an output unit 13, and a storage unit 14.

The data acquisition unit 11 acquires various kinds of information necessary for estimating the flow rate of hot water. For example, the data acquisition unit 11 acquires the measured values measured by the various sensors 5 to 8.

The flow rate estimation unit 12 estimates the flow rate of hot water to be supplied to the facility 4 from the hot water storage tank 3 on the basis of the measured values or the like measured by the sensors 5 to 8.

The output unit 13 outputs the flow rate estimated by the flow rate estimation unit 12 or transmits the flow rate to another device. For example, the output unit 13 outputs an estimated value of the flow rate of hot water to a hot water demand prediction unit (not illustrated) provided in the cloud server 100C.

The storage unit 14 stores data and the like acquired by the data acquisition unit 11.

### (Flow Rate Estimation Method)

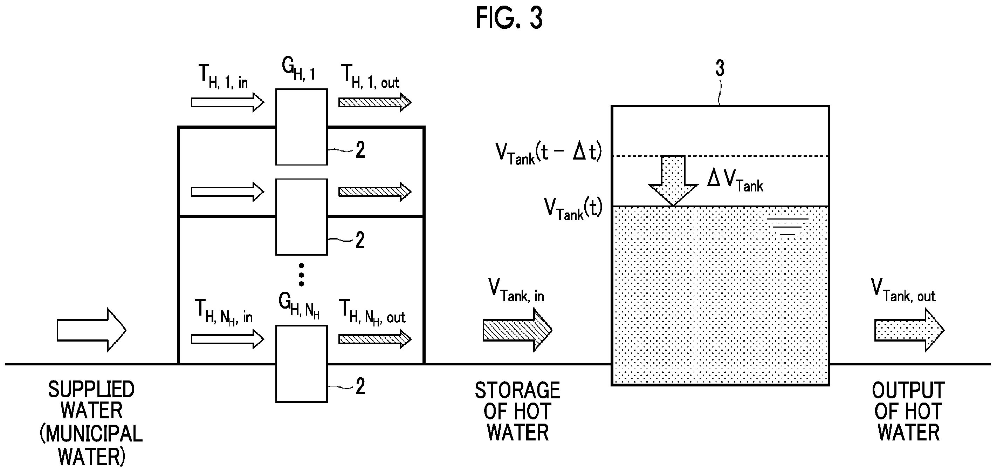

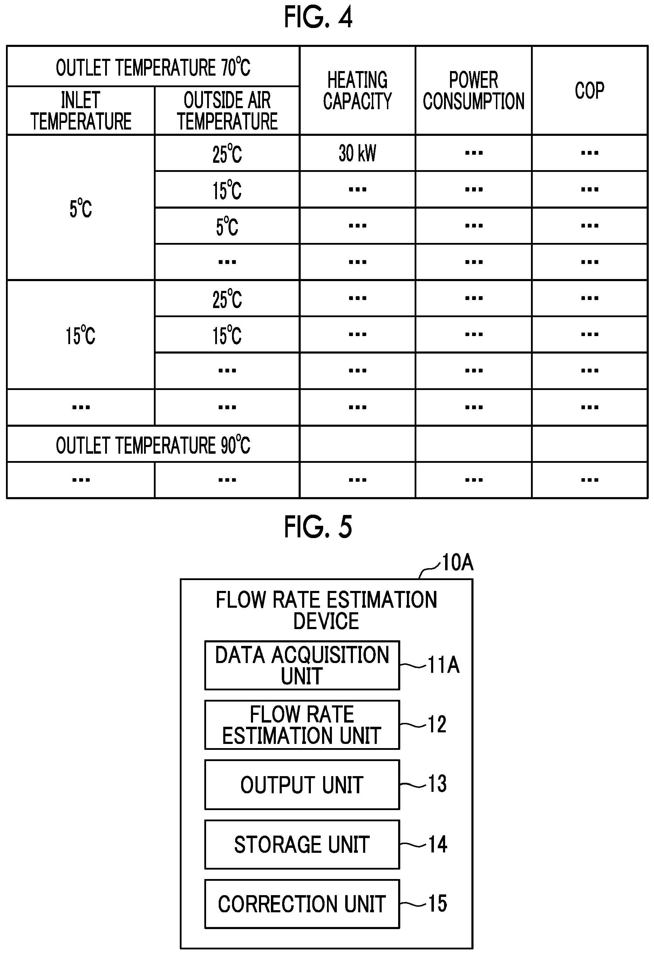

Next, the method of estimating the flow rate of hot water supplied to be supplied to the facility 4 from the hot water storage tank 3 by the flow rate estimation unit 12 will be described with reference to Figs. 3 and 4. Fig. 3 is a diagram illustrating the flow rate estimation method according to the first embodiment. Fig. 3 is a schematic view of a hot water supply system in which a plurality of (N_{H}) heat source machines 2 are provided. As in Expression (1), an outflow rate of hot water from the hot water storage tank 3 can be calculated as a difference between the "amount of inflow into the tank" and the "change in the hot water storage amount". 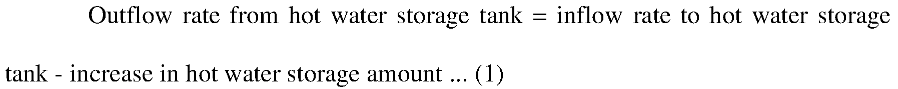 Outflow rate from hot water storage tank = inflow rate to hot water storage tank - increase in hot water storage amount (1)

The change in hot water storage amount of the second term on the right side of Expression (1) can be measured by the water level sensor 7. Then, the problem is how to estimate the inflow rate into the hot water storage tank 3. Here, in a case where the outflow rate is represented by Vtank, out(1), the inflow rate is represented by Vtank, in(1), and a change in the hot water storage amount is represented by ΔVtank(1), Expression (1) can be represented as follows. $Vtank , out \left(1\right) = Vtank , in \left(1\right) - ΔVtank$ (1')

Here, ΔVtank is a change in the hot water storage amount in the infinitesimal time Δt as illustrated in Expression (2). $ΔVtank = Vtank \left(t\right) - Vtank \left(t-Δt\right)$ (2)

The relationship between the volume V(1) and the flow rate F(1/min) that represent the outflow rate and the inflow rate can be represented as follows. $V \left(1\right) = F \left(1/min\right) \times Δt \left(min\right)$ (3)

As thermodynamic formulae related to the hot water supply system 1, the following Expressions (4) and (5) are known to be established. $Q \left(kJ/s\right) = Cp \left(kJ/kg\cdot °C\right) \times G \left(1/s\right) \times {ΔT}_{H} \left(°C\right)$ (4) $ΔTH = {T}_{H , i , out} - {T}_{H , i , in}$ (5)

Here, T_{H, i, out} is the temperature of hot water on the outlet side of the heat source machine 2 (measured value of the temperature sensor 6), T_{H, i, in} is the temperature of the supplied water on the inlet side of the heat source machine 2 (measured value of the temperature sensor 5), Cp is the low-pressure specific heat of water (4.187 (kJ/kg•°C)), and G is the outflow rate of hot water flowing out from the heat source machine 2, that is, the inflow rate Vtank, in into the hot water storage tank 3 which is a problem. Q is a heating capacity of the heat source machine 2, and is a value determined from the temperature of the supplied water on the inlet side and the temperature of the hot water on the outlet side of the heat source machine 2 and the outside air temperature. Specifically, as specification data of the heat source machine 2, a characteristic table related to the heating capacity illustrated in Fig. 4 is generally given. In the characteristic table, an inlet temperature (measured value of the temperature sensor 5), an outlet temperature (measured value of the temperature sensor 6), the outside air temperature (measured value of the temperature sensor 8), and the heating capacity Q are associated with each other. The value of the heating capacity Q is determined from the characteristic table of Fig. 4 and the measured values of the temperature sensors 5, 6, and 8, the outflow rate G (= Vtank, in) of hot water can be calculated from Q, the constant Cp, and ΔT_{H} (ΔT_{H} can also be obtained from the measured values of the temperature sensors 5 and 6 by Expression (5) described above) and Expression (4), and the outflow rate Vtank, out from the hot water storage tank 3 can be further calculated from Expression (1').

It is assumed that the outflow rate from the i-th heat source machine 2 among the N_{H} heat source machines 2 is represented by G_{H, i}, the heating capacity of the i-th heat source machine 2 is represented by Q_{H, i}, the temperature of the supplied water on the inlet side is represented by T_{H, i, in}, and the temperature of the supplied water on the outlet side is represented by T_{H, i, out}. In a case where Expression (4) is modified, the following Expression (6) is obtained. ${G}_{H , i} = {Q}_{H , i} \div \left(Cp\times \left({T}_{H , i , out}-{T}_{H , i , in}\right)\right)$ (6)

Therefore, the inflow rate Vtank, in into the hot water storage tank 3 in the unit time Δt can be obtained by Expression (7).

[Equation 1] ${V}_{tank , in} = Δ t \times {\sum }_{i = 1}^{{N}_{H}} {G}_{H , i}$ (7)

The flow rate estimation unit 12 estimates Vtank, out(l) by Expression (7) and Expression (1'), and estimates the flow rate (l/s) of hot water flowing through the pipe 9C by using Expression (3) from the estimated outflow rate (1). The output unit 13 outputs the flow rate estimated by the flow rate estimation unit 12.

### (Effects)

As described above, according to the present embodiment, it is possible to estimate the flow rate of hot water to the facility 4 from the hot water storage tank 3 of the hot water supply system 1 in which the flow rate sensor 99 is not provided. As a result, it is possible to perform the demand prediction of hot water or create the hot water storage plan for the hot water supply system 1 in which the flow rate sensor 99 is not mounted. Since there is no need to install a flowmeter, it is possible to reduce the cost of installing the flowmeter, the labor and costs required for additions and maintenance, the labor required for repairs to flowmeter failures, and complaints. The flow rate can be estimated without depending on the system configuration (tank type, number of tanks, number of heat source machines, pipe length, pipe diameter, pipe height, and the like) of the customer side, and as described in the following embodiments, in the hot water supply system provided with the flow rate sensor 99, the system can also be used as a backup in the event of failure or deterioration of the flow rate sensor 99.

### <Second Embodiment>

Hereinafter, a flow rate estimation device according to a second embodiment of the present disclosure will be described with reference to Figs. 5 to 8. In the hot water supply system according to the second embodiment, the flow rate sensor 99 is provided in Fig. 1.

### (Configuration of Flow Rate Estimation Device)

Fig. 5 is a block diagram illustrating an example of the flow rate estimation device according to the second embodiment.

Among the configurations according to the second embodiment, the same configurations as those in the flow rate estimation device 10 according to the first embodiment will be denoted by the same reference numerals and the description thereof will be omitted. A flow rate estimation device 10A includes a data acquisition unit 11A, the flow rate estimation unit 12, the output unit 13, the storage unit 14, and a correction unit 15.

The data acquisition unit 11A acquires a measured value of the flow rate sensor 99 in addition to the sensors 5 to 8.

The correction unit 15 corrects the estimated value of the outflow rate such that the estimated value approaches the actually measured value, on the basis of the relationship between the actually measured value and the estimated value of the outflow rate from the hot water storage tank 3.

### (Correction Method)

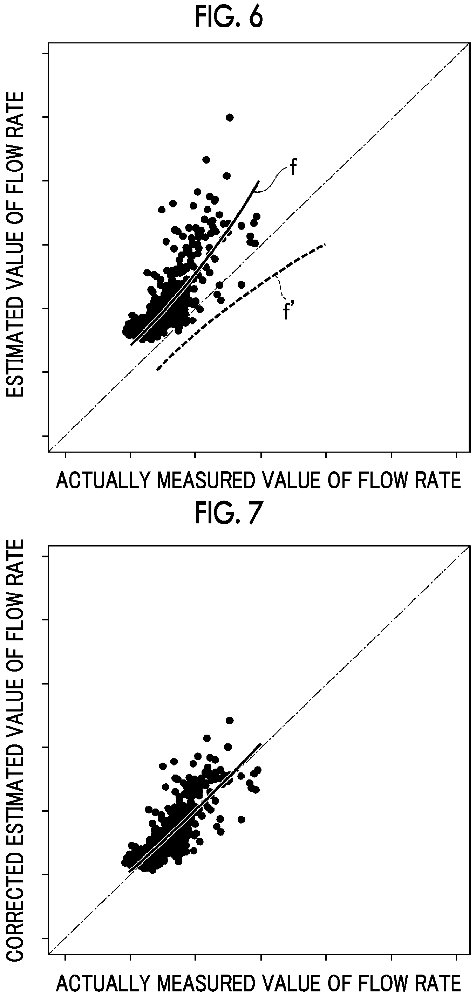

Next, correction processing of the flow rate according to the second embodiment will be described with reference to Fig. 6.

In the scatter graph of Fig. 6, the vertical axis of is the estimated value (l/s) of the flow rate estimated by the flow rate estimation unit 12 using the method of the first embodiment, and the horizontal axis is the actually measured value (l/s) of the flow rate of hot water supplied from the hot water storage tank 3 to the facility 4 measured by the flow rate sensor 99. One point in the scatter graph of Fig. 6 illustrates a relationship between the estimated value and the actually measured value for the flow rate at a certain point in time. The data acquisition unit 11A acquires the measured value of the sensor 99 in addition to the sensors 5 to 8, and records the actually measured value of the flow rate of hot water in the storage unit 14 in association with the time point. The flow rate estimation unit 12 calculates the estimated value of the flow rate of hot water using the method described in the first embodiment on the basis of the measured values of the sensors 5 to 8, and records the estimated value in the storage unit 14 in association with the time point. The correction unit 15 creates a scatter graph illustrated in Fig. 6 on the basis of the estimated values and the actually measured values of the flow rate of hot water at the same time point recorded in the storage unit 14. In the case of the data illustrated in Fig. 6, the estimated values are slightly greater values than the actually measured values. The correction unit 15 calculates a function of the estimated value and the actually measured value on the basis of the distribution of the scatter graph. Here, in a case where the estimated value is y and the actually measured value is x, the correction unit 15 approximates the relationship between the estimated value and the actually measured value by, for example, a quadratic function y = ax2 + bx + c. In Fig. 6, f is a function representing a relationship between the actually measured value and the estimated value of the flow rate of hot water calculated by the correction unit 15. The correction unit 15 derives an inverse function f' of the function f, that is, a function f' for obtaining the actually measured value from the estimated value. Next, the correction unit 15 substitutes the estimated value of the flow rate of hot water estimated by the flow rate estimation unit 12 into the inverse function f' derived in advance. Then, the corrected estimated value of the flow rate of hot water is obtained. Fig. 7 illustrates a relationship between the corrected estimated value and the actually measured value of the flow rate of hot water. In the scatter graph of Fig. 7, the vertical axis illustrates the corrected estimated value, and the horizontal axis illustrates the actually measured value. As illustrated in Fig. 7, the corrected estimated values of the flow rate and the actually measured values are distributed substantially on the line of y = x. That is, by the correction by the correction unit 15, it is possible to estimate the flow rate closer to the actually measured value.

### (Operation)

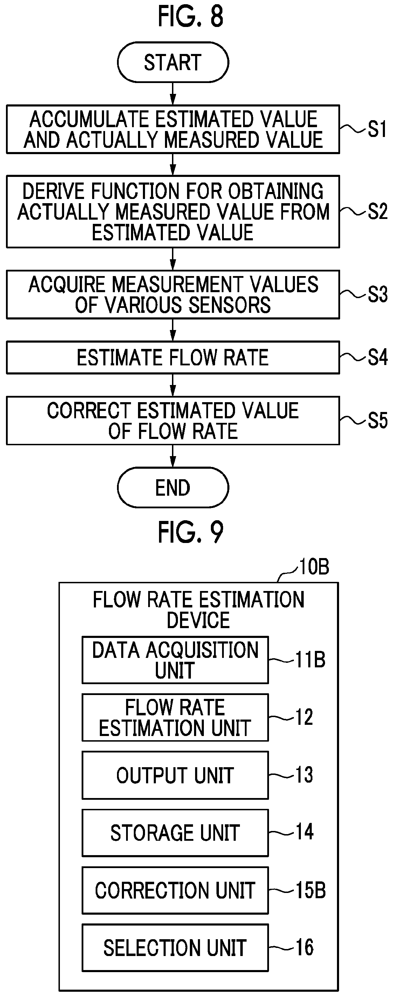

Fig. 8 is a flowchart illustrating an example of the flow rate estimation processing according to the second embodiment.

The flow rate estimation device 10A accumulates the estimated value and the actually measured value of the flow rate of hot water (step S1). The data acquisition unit 11A accumulates the measured value of the flow rate sensor 99 and the measurement time point in the storage unit 14, and the flow rate estimation unit 12 accumulates the estimated value of the flow rate and the estimation time point in the storage unit 14. Next, the correction unit 15 derives a function for obtaining an actually measured value from the estimated value of the flow rate (step S2). As described using Fig. 6, the correction unit 15 may derive the function f for obtaining the estimated value from the actually measured value of the flow rate on the basis of the distribution shape of the scatter graph and then derive the inverse function f', or may derive the function corresponding to the inverse function f' from the beginning. The correction unit 15 stores the derived function or the coefficients of the function (in a case where the inverse function f' is y = a'x² + b'x + c', the coefficients are a', b', and c') in the storage unit 14. This is the preparation stage.

Next, the flow rate estimation processing during the operation will be described. First, the data acquisition unit 11A acquires the measured values of the sensors 5 to 8 (step S3), and stores the measured values in the storage unit 14. Next, the flow rate estimation unit 12 estimates the flow rate of hot water supplied from the hot water storage tank 3 to the facility 4 by using the measured values stored in the storage unit 14, the characteristic table of Fig. 4, and the above-described Expression (7), Expression (1'), and Expression (3) (step S4). The flow rate estimation unit 12 outputs the estimated flow rate to the correction unit 15. Next, the correction unit 15 corrects the estimated value of the flow rate (step S5). The correction unit 15 substitutes the estimated value of the flow rate acquired from the flow rate estimation unit 12 into the function derived in step S2 to obtain the corrected estimated value of the flow rate. The output unit 13 outputs the flow rate corrected by the correction unit 15. Thereafter, the processing of step S3 and thereafter is repeatedly executed.

### (Effects)

According to the present embodiment, the estimated value of the flow rate can be corrected on the basis of the actually measured value. For example, in the estimation method of the flow rate described in the first embodiment, the characteristic table illustrated in Fig. 4 is used, but the value of the characteristic table is a design value, and thus a difference occurs from the heating capacity Q in a case in which hot water is generated in an actual environment. By substituting the estimated value into the function of the actually measured value and the estimated value by the correction unit 15, it is possible to correct the error of the estimated value of the flow rate due to the difference. In the above description, the function to be approximated is the quadratic function, but the function to be calculated by the correction unit 15 may not be the quadratic function.

### <Third Embodiment>

Hereinafter, a flow rate estimation device 10B according to a third embodiment of the present disclosure will be described with reference to Figs. 9 to 12. In the second embodiment, it is assumed that the flow rate sensor 99 is provided. However, in the third embodiment, even in the case of the hot water supply system 1 in which the flow rate sensor 99 is not provided, the same correction as in the second embodiment is performed.

### (Configuration of Flow Rate Estimation Device)

Fig. 9 is a block diagram illustrating an example of the flow rate estimation device according to the third embodiment.

The flow rate estimation device 10B according to the third embodiment includes a data acquisition unit 11B, the flow rate estimation unit 12, the output unit 13, the storage unit 14, a correction unit 15B, and a selection unit 16. Among the configurations of the flow rate estimation device 10B, the same configurations as those in the flow rate estimation device 10A will be denoted by the same reference numerals and the description thereof will be omitted.

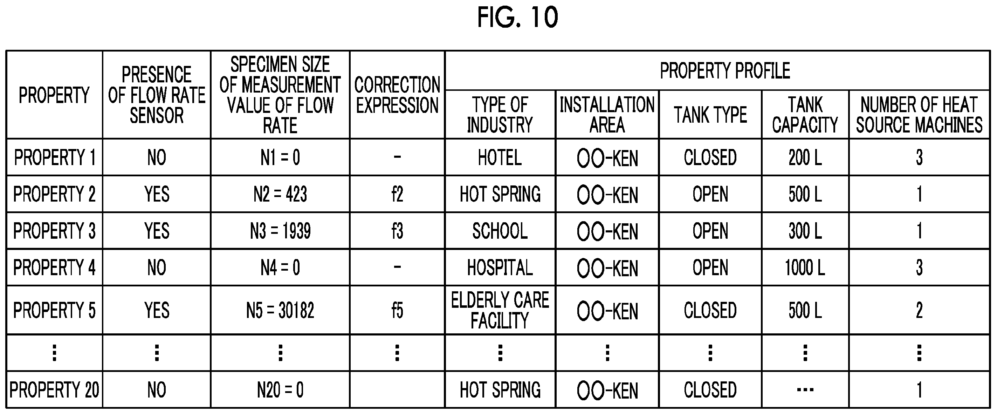

The data acquisition unit 11B acquires property information in addition to the measured values of the various sensors 5 to 8, and stores the property information in the storage unit 14. The property is a hot water supply system introduced in another facility. Fig. 10 illustrates an example of the property information. The property information includes information such as the presence or absence of the flow rate sensor for each property, a specimen size of the actually measured value of the flow rate used to derive a correction expression, the correction expression (function used for the correction described in the second embodiment), and the property profile (the type of industry, the installation area, the type of tank, the volume of the tank, and the number of heat source machines). Since the hot water supply system 1 according to the present embodiment does not include the flow rate sensor 99, it is not possible to derive the function used for the correction by the method described in the second embodiment. Therefore, in the present embodiment, it is considered to select a property having a similar property profile from among properties provided with the flowmeter with reference to the property information illustrated in Fig. 10, and to reuse the correction expression (function) of the selected property in the hot water supply system 1.

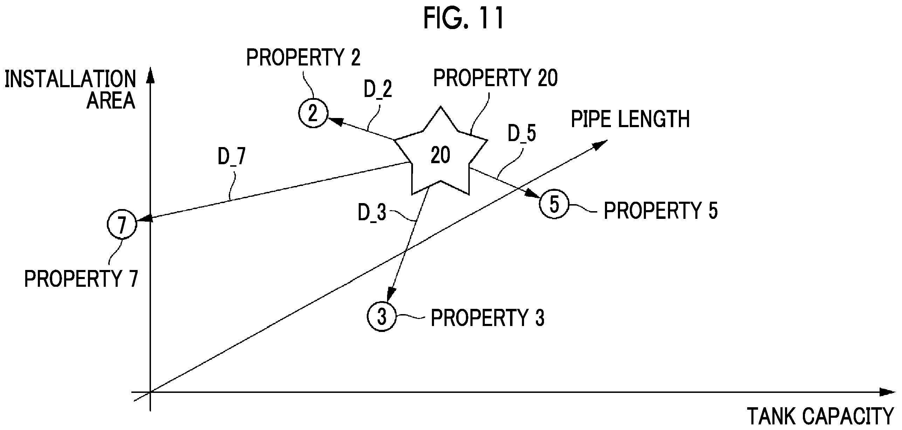

The selection unit 16 selects a property having a similar property profile from among the properties provided with the flowmeter with reference to the property information acquired by the data acquisition unit 11. The processing of selecting the similar property by the selection unit 16 will be described with reference to Fig. 11. For example, it is assumed that the hot water supply system 1 is a property 20 (bottom row) of the property information in Fig. 10.

(Procedure 1) The set of properties having the flow rate sensor is denoted by B_observable. Assume that the following conditions are satisfied. B_observable = {property 2, property 3, property 5, property 7, property 11, property 16} (properties 11 and 16 are not illustrated)

(Procedure 2) Among these, the selection unit 16 selects, as a subset, for example, a representative similar property: B_similar from the viewpoints of the following (a) and/or (b).
(a) A set of properties having the same type of industry is selected. In the case of the example in Fig. 10, B_similar = {property 2, property 11}.
(b) Other property profiles (installation area, tank type, tank volume, pipe length, and the like) of the property (property 20) are compared at a distance D_i (i is a property number) on a feature space, and k properties having a high degree of similarity are selected. Fig. 11 illustrates a diagram in which three parameters of the property profile, that is, the location, the tank capacity, and the pipe length are taken on each coordinate axis of a three-dimensional coordinate space as an example, and each property is plotted in the coordinate space. As illustrated in the drawing, the properties 2 and 5 are positioned at positions close to the property 20, the property 3 is positioned at a slightly separated position, and the property 7 is positioned at a separated position. The selection unit 16 calculates the distance D_i between the properties, and selects k properties in order from the property having the shortest distance. In Fig. 11, in a case where k = 3, B_similar = {property 2, property 3, and property 5}. In Fig. 11, only three parameters are used for convenience of illustration, but the selection unit 16 may calculate the distance D_i between the properties in a case where the properties are plotted in a multi-dimensional space by using all the parameters (five types of parameters in the example of Fig. 10) of the property profiles. The selection unit 16 may select the property (in this case, the property 2) selected from both the viewpoints (a) and (b), or may select all the properties selected by any of the viewpoints (a) and (b). Alternatively, the selection unit 16 may select the property only from the viewpoint of one of (a) or (b).

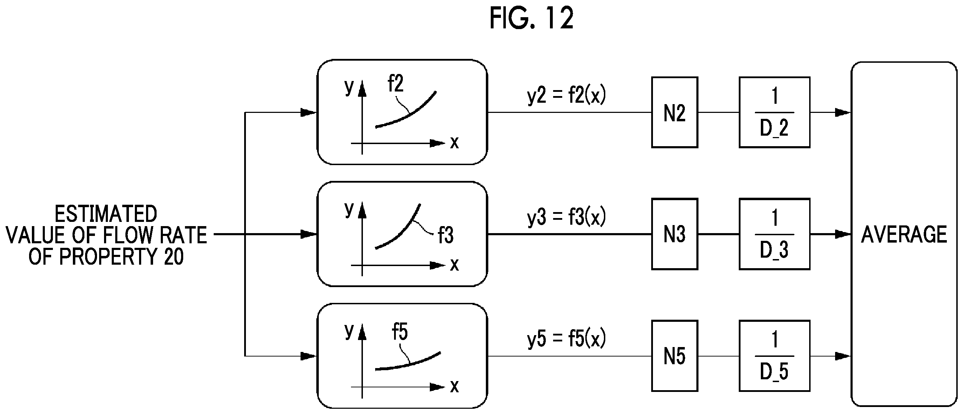

The correction unit 15B acquires the correction expression of the property selected by the selection unit 16 with reference to the property information acquired by the data acquisition unit 11, and corrects the estimated value of the flow rate estimation unit 12 by using the correction expression. For example, in a case where the selection unit 16 selects the properties 2, 3, and 5, the correction unit 15B substitutes the estimated value x of the flow rate estimation unit 12 into a correction expression f2 of the property 2 to calculate the corrected estimated value y2. Similarly, the correction unit 15B substitutes the estimated value x of the flow rate estimation unit 12 into a correction expression f3 of the property 3 and a correction expression f5 of the property 5, respectively to calculate the corrected estimation values y3 and y5. Then, the correction unit 15B calculates an average value of y2, y3, and y5, and sets this average value as the corrected flow rate. The correction unit 15B may weight y2, y3, and y5 by the inverse number of the specimen size of the actually measured value of the flow rate and/or the distance D_i on the feature space (Fig. 11) used for the derivation of the correction expression. An outline of the correction processing according to the present embodiment is illustrated in Fig. 12. In Fig. 12, N2, N3, and N5 are a specimen size of the property 2, a specimen size of the property 3, and a specimen size of the property 5, respectively, and D_2, D_3, and D_5 are a distance D_i between the property 20 and the property 2, a distance D_i between the property 20 and the property 3, and a distance D_i between the property 20 and the property 5, respectively. In a case where weighting is performed by both the inverse number of the specimen size Ni and the distance Di, the corrected flow rate is calculated by the following expression, for example. 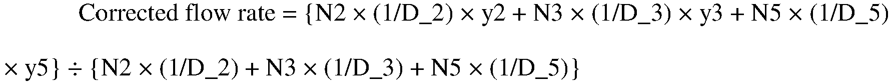 Corrected flow rate = {N2 × (1/D_2) × y2 + N3 × (1/D_3) × y3 + N5 × (1/D_5) × y5} ÷ {N2 × (1/D_2) + N3 × (1/D_3) + N5 × (1/D_5)}

The weight may be, for example, a logarithm of N2 or (1/D_2).

### (Operation)

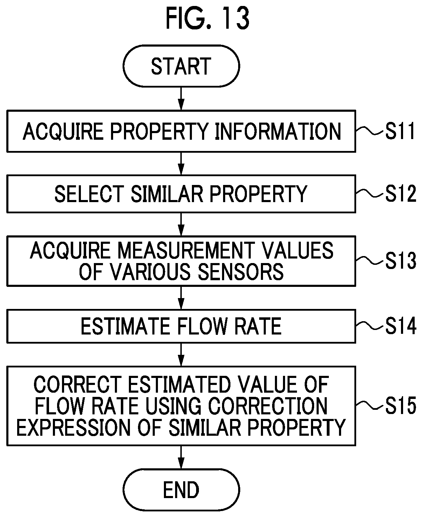

Fig. 13 is a flowchart illustrating an example of the flow rate estimation processing according to the third embodiment.

The data acquisition unit 11B acquires the property information (step S11). The data acquisition unit 11B stores the property information in the storage unit 14. Next, the selection unit 16 selects a property similar to the hot water supply system 1 as an evaluation target with reference to the property information of the storage unit 14 (step S12). For example, with reference to the property profile, the selection unit 16 (a) selects a property having the same type of industry, or selects a similar property using, for example, a method of (b) comparing parameters that characterize the characteristics of the properties, such as the installation area, the pipe length, the tank capacity, the tank type, and the number of heat source machines and selecting properties similar to the property (hot water supply system 1) as the evaluation target. The selection unit 16 stores identification information of the selected property in the storage unit 14. The selection unit 16 stores the distance D_i calculated in the case of selecting the similar property, in the storage unit 14. This is the preparation stage.

Next, the flow rate estimation processing during the operation will be described. First, the data acquisition unit 11B acquires the measured values of the sensors 5 to 8 (step S13), and stores the measured values in the storage unit 14. Next, the flow rate estimation unit 12 estimates the flow rate of hot water supplied from the hot water storage tank 3 to the facility 4 by using the measured values stored in the storage unit 14, the characteristic table of Fig. 4, and the above-described Expression (7), Expression (1'), and Expression (3) (step S14). The flow rate estimation unit 12 outputs the estimated flow rate to the correction unit 15B. Next, the correction unit 15B corrects the estimated value of the flow rate by using the correction expression of the similar property (step S15). The correction unit 15B acquires the correction expression of the property selected by the selection unit 16 with reference to the property information, and calculates an average or a weighted average of the values (in the example described above, y2, y3, and y5) obtained by correcting the flow rate using each correction expression. In a case of performing the correction using the weighted average, the weight (for example, the inverse number of the specimen size Ni or the distance D_i) to be given may be set by a user. For example, in a case where the user sets to perform weighting using the specimen size Ni as the weight, the data acquisition unit 11B receives the setting and stores the setting in the storage unit 14. In a case where weighting using the specimen size Ni is set in the storage unit 14, the correction unit 15B corrects the flow rate estimated by the flow rate estimation unit 12, for example, by (N2•y2 + N3•y3 + N5•y5) ÷ (N2 + N3 + N5). The output unit 13 outputs the flow rate corrected by the correction unit 15B. Thereafter, the processing of step S13 and thereafter is repeatedly executed.

### (Effects)

According to the present embodiment, even in the hot water supply system 1 in which the flow rate sensor 99 is not provided, the same correction as that of the second embodiment can be performed. Therefore, it is possible to improve the estimation accuracy of the flow rate, and to improve the accuracy of the demand prediction and the hot water storage plan.

### <Fourth Embodiment>

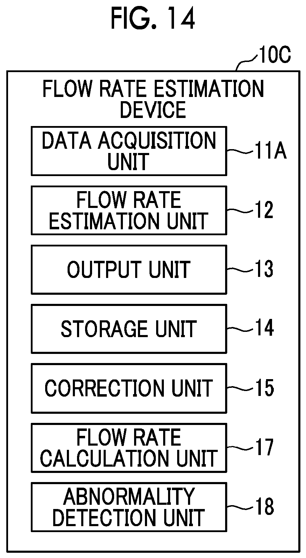

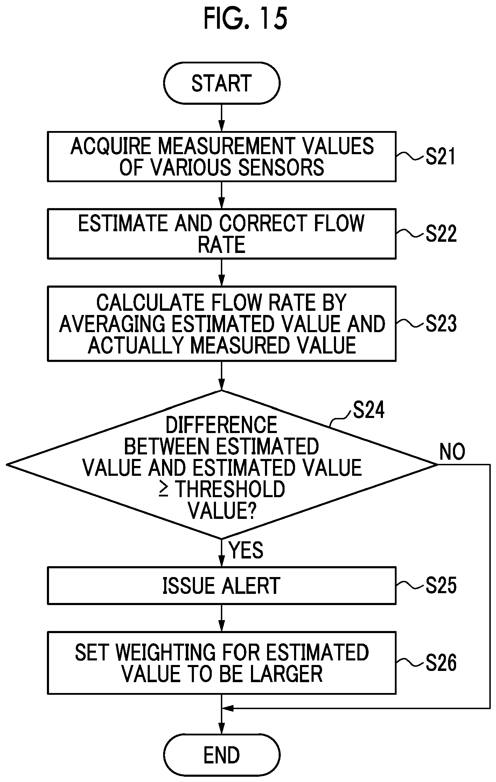

Hereinafter, a flow rate estimation device according to a fourth embodiment of the present disclosure will be described with reference to Figs. 14 and 15. The fourth embodiment can be combined with the first embodiment or the second embodiment. However, here, a configuration in a case where the fourth embodiment is combined with the second embodiment will be described as an example. In the fourth embodiment, it is assumed that the hot water supply system 1 includes the flow rate sensor 99.

### (Configuration of Flow Rate Estimation Device)

Fig. 14 is a block diagram illustrating an example of the flow rate estimation device according to the fourth embodiment.

A flow rate estimation device 10C according to the fourth embodiment includes the data acquisition unit 11A, the flow rate estimation unit 12, the output unit 13, the storage unit 14, the correction unit 15, a flow rate calculation unit 17, and an abnormality detection unit 18. Among the configurations of the flow rate estimation device 10C, the same configurations as those in the flow rate estimation device 10A will be denoted by the same reference numerals and the description thereof will be omitted.

The data acquisition unit 11A acquires the measured value of the flow rate sensor 99 in addition to the measured values of the various sensors 5 to 8.

The flow rate calculation unit 17 calculates the weighted average (including an arithmetic mean) of the corrected estimated values of the flow rate corrected by the correction unit 15 and the actually measured values of the flow rate acquired by the data acquisition unit 11A, as the flow rate of hot water. In the flow rate sensor 99, there is a possibility that the accuracy of the measured value may be decreased due to deterioration, failure, noise, and the like. Therefore, in the fourth embodiment, the average of the estimated values and the actually measured values is taken to stabilize the accuracy and improve the reliability. In a case where the fourth embodiment is combined with the first embodiment, the flow rate calculation unit 17 calculates the weighted average of the estimated values of the flow rate estimated by the flow rate estimation unit 12 and the actually measured value of the flow rate acquired by the data acquisition unit 11A, as the flow rate of hot water.

The abnormality detection unit 18 detects the abnormality of the flow rate sensor 99 on the basis of the difference between the estimated value of the flow rate of hot water estimated by the flow rate estimation unit 12 or the corrected estimated value of the flow rate corrected by the correction unit 15 and the actually measured value of the flow rate measured by the flow rate sensor 99. For example, the abnormality detection unit 18 continuously monitors the difference between the (corrected) estimated value and the actually measured value, or in a case where the difference is equal to or greater than the threshold value, or in a case where the state continues for a predetermined time or more or the difference between is equal to or greater than the threshold value a predetermined number of times or more within a predetermined time, the abnormality detection unit 18 determines that an abnormality such as a failure or deterioration occurs in the flow rate sensor 99, and outputs an alert. In a case where the abnormality detection unit 18 detects the abnormality of the flow rate sensor 99, the flow rate calculation unit 17 may calculate the flow rate by setting the weighting for the estimated value to be greater than before. This is because it is considered that the estimated value has higher accuracy and reliability in a case where the abnormality of the flow rate sensor 99 occurs.

### (Operation)

Fig. 15 is a flowchart illustrating an example of the flow rate estimation processing according to the fourth embodiment.

The flow rate estimation device 10C repeatedly executes the following processing.

The data acquisition unit 11A acquires the measured values of the various sensors (step S21). The data acquisition unit 11A acquires the measured values of the sensors 5 to 8 and 99, and stores the measured values in the storage unit 14. Next, the flow rate estimation unit 12 estimates the flow rate by the processing described in the first embodiment, and the correction unit 15 corrects the estimated value of the flow rate by the processing described in the second embodiment (step S22). In the case of a configuration in which the correction unit 15 is not provided (in a case where the fourth embodiment is combined with the first embodiment), only the estimation of the flow rate is executed. Next, the flow rate calculation unit 17 calculates the weighted average of the actually measured value of the flow rate acquired in step S21 and the estimated value or corrected estimated value of the flow rate calculated in step S22 (step S23). The output unit 13 outputs the calculated value as the flow rate of hot water.

Next, the abnormality detection unit 18 calculates the difference between the actually measured value of the flow rate acquired in step S21 and the estimated value or the corrected estimated value of the flow rate calculated in step S22, and determines whether or not the difference is equal to or greater than the threshold value (step S24). In a case where the difference is less than the threshold value (step S24; No), the processing flow of Fig. 15 ends, and the processing from step S21 is repeatedly executed again.

In a case where the difference is equal to or greater than the threshold value (step S24; Yes), the abnormality detection unit 18 issues an alert for notifying that the abnormality of the flow rate sensor 99 is detected (step S25). In a case where the alert is issued, the flow rate calculation unit 17 sets the weighting for the estimated value or the corrected estimated value to be greater than before (step S26). For example, in a situation where the abnormality of the flow rate sensor 99 is not detected, weighting may be performed equally on the estimated value and the actually measured value, and after the abnormality of the flow rate sensor 99 is detected, the weighting for the estimated value or the corrected estimated value may be set to be larger at a ratio of 7:3, for example. Alternatively, the weighting after the abnormality is detected may be set by the user, and appropriate weighting may be performed in accordance with the degree of abnormality of the flow rate sensor 99.

The determination in step S24 may be that a state where the difference between the actually measured value and the (corrected) estimated value is equal to or larger than the threshold value continues for a predetermined time or more, or that the difference between the actually measured value and the (corrected) estimated value is equal to or greater than the threshold value a predetermined number of times or more within a predetermined time.

### (Effects)

According to the present embodiment, the reliability of the calculated flow rate can be improved by calculating the flow rate using both the estimated value and actually measured value of the flow rate. By comparing the estimated value and the actually measured value of the flow rate with each other, it is possible to detect the abnormality of the flow rate sensor 99, and after the abnormality is detected, the accuracy of the calculated flow rate value can be maintained by giving a greater weight on the estimated value and calculating the flow rate. In a case where the flow rate sensor 99 fails and needs to be replaced or repaired, the hot water supply system 1 cannot be operated until the repair is completed in general, but the flow rate can be estimated by the flow rate estimation unit 12, so that the operation of the hot water supply system 1 can be continued.

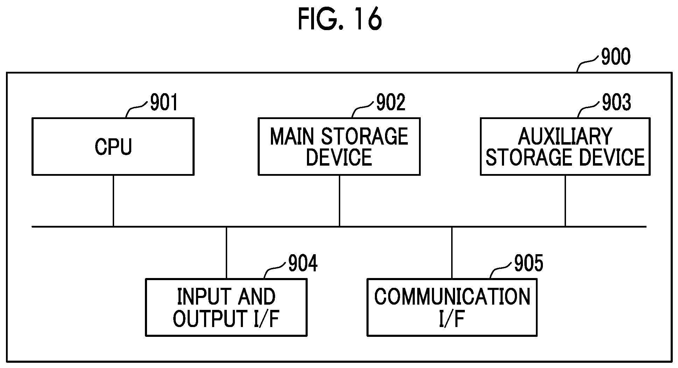

Fig. 16 is a diagram illustrating an example of a hardware configuration of the flow rate estimation device according to each embodiment.

A computer 900 includes a CPU 901, a main storage device 902, an auxiliary storage device 903, an input and output interface 904, and a communication interface 905.

The flow rate estimation devices 10 to 10C described above are mounted on the computer 900. Then, each of the functions described above is stored in the auxiliary storage device 903 in the form of a program. The CPU 901 reads out the program from the auxiliary storage device 903, expands the program in the main storage device 902, and executes the above-described processing according to the program. The CPU 901 allocates a storage area in the main storage device 902 according to the program. The CPU 901 allocates a storage area for storing data being processed, in the auxiliary storage device 903 according to the program.

A program for realizing all or a part of the functions of the flow rate estimation devices 10 to 10C is recorded on a computer-readable recording medium, and the program recorded on the recording medium is read into a computer system and executed, whereby processing by each functional unit may be performed. The "computer system" herein includes an OS and hardware such as peripheral devices. The "computer system" also includes a homepage providing environment (or display environment) in a case where a WWW system is used. The "computer-readable recording medium" refers to a portable medium such as a CD, a DVD, or a USB, or a storage device such as a hard disk built into the computer system. In a case where the program is distributed to the computer 900 by a communication line, the computer 900 to which the program is distributed may expand the program in the main storage device 902 and execute the processing described above. The program described above may be for realizing a part of the above functions, or may further realize the above-described functions in combination with a program already recorded in the computer system.

### Reference Signs List

1: hot water supply system
2: heat source machine
3: hot water storage tank
4: facility
5, 6, 8: temperature sensor
7: water level sensor
99: flow rate sensor
100A: controller
100B: edge server
100C: cloud server
10: flow rate estimation device
11: data acquisition unit
12: flow rate estimation unit
13: output unit
14: storage unit
15: correction unit
900: computer
901: CPU
902: main storage device
903: auxiliary storage device
904: input and output interface
905: communication interface

## Claims

1. A flow rate estimation device (10) that estimates a flow rate of hot water supplied from a hot water supply system (1) including a heat source machine (2) and a hot water storage tank (3) that stores hot water created by the heat source machine (2), the flow rate estimation device (10) comprising:
a flow rate estimation unit (12) configured to estimate an inflow rate of hot water to the hot water storage tank (3), from a first temperature that is a temperature of water flowing into the heat source machine (2), a second temperature that is a temperature of hot water supplied from the heat source machine (2) to the hot water storage tank (3), and a heating capacity of the heat source machine (2) calculated on a basis of the first temperature, the second temperature, and an outside air temperature, and to estimate a flow rate of hot water supplied from the hot water storage tank (3), from the inflow rate and a change in a hot water storage amount of the hot water storage tank (3),
a correction unit (15) configured to derive a function for obtaining an actually measured value of the flow rate of hot water, from the estimated value of the flow rate of hot water estimated by the flow rate estimation unit (12), and to correct the estimated value of the flow rate of hot water estimated by the flow rate estimation unit (12), on a basis of the function, and
a storage unit (14) configured to store the estimated value of the flow rate of hot water and the actual measured value of the flow rate of hot water in association with each other, **characterized in that**
the correction unit (15) is configurated to create a scatter graph on the basis of the estimated values and the actually measured values of the flow rate of hot water recorded in the storage unit (14), to calculate a first function for calculating the estimated value from the actual value based on the scatter graph, and to derive an inverse function of the first function as the function.

2. The flow rate estimation device (10) according to claim 1, further comprising:
a selection unit configured to select, from among property information including the function calculated for other hot water supply systems other than the hot water supply system (1) as an evaluation target and characteristic information of the other hot water supply systems, the other hot water supply systems having similar characteristic information to the hot water supply system (1) as the evaluation target,
wherein the correction unit corrects the estimated value of the flow rate of hot water in the hot water supply system (1) as the evaluation target, on the basis of the function derived for the other hot water supply systems selected by the selection unit, the estimated value being estimated by the flow rate estimation unit (12).

3. The flow rate estimation device (10) according to claim 2,
wherein the selection unit calculates a degree of similarity between the characteristic information of the other hot water supply systems and characteristic information of the hot water supply system (1) as the evaluation target, and
the correction unit corrects the estimated value of the flow rate of hot water estimated by the flow rate estimation unit (12) by performing weighting in accordance with the degree of similarity on the function derived for the other hot water supply systems selected by the selection unit.

4. The flow rate estimation device (10) according to claim 2 or 3,
wherein the correction unit corrects the estimated value of the flow rate of hot water estimated by the flow rate estimation unit (12) by performing weighting in accordance with numbers of the estimated value of the flow rate and the actually measured value of the flow rate that are used for deriving the function included in the property information.

5. The flow rate estimation device (10) according to any one of claims 1 to 4, further comprising:
a flow rate calculation unit configured to calculate a weighted average of the estimated value of the flow rate of hot water estimated by the flow rate estimation unit (12) and an actually measured value of the flow rate of hot water, as the flow rate of hot water.

6. The flow rate estimation device (10) according to any one of claims 1 to 4, further comprising:
a flow rate calculation unit configured to calculate a weighted average of the corrected estimated value of the flow rate of hot water corrected by the correction unit and the actually measured value of the flow rate of hot water, as the flow rate of hot water.

7. The flow rate estimation device (10) according to any one of claims 1 to 6, further comprising:
an abnormality detection unit configured to detect an abnormality of a sensor that measures an actually measured value of the flow rate of hot water, on a basis of a difference between the estimated value of the flow rate of hot water estimated by the flow rate estimation unit (12) and the actually measured value.

8. The flow rate estimation device (10) according to any one of claims 1 to 6, further comprising:
a flow rate calculation unit configured to calculate a weighted average of the estimated value of the flow rate of hot water estimated by the flow rate estimation unit (12) and an actually measured value of the flow rate of hot water, as the flow rate of hot water; and
an abnormality detection unit configured to detect an abnormality of a sensor that measures the actually measured value, on a basis of a difference between the estimated value and the actually measured value,
wherein in a case where the abnormality detection unit detects an abnormality, the flow rate calculation unit sets weighting to the estimated value to be greater than before.

9. A flow rate estimation method of estimating a flow rate of hot water supplied from a hot water supply system (1) including a heat source machine (2) and a hot water storage tank (3) that stores hot water created by the heat source machine (2), the flow rate estimation method comprising:
estimating an inflow rate of hot water to the hot water storage tank (3), from a first temperature that is a temperature of water flowing into the heat source machine (2), a second temperature that is a temperature of hot water supplied from the heat source machine (2) to the hot water storage tank (3), and a heating capacity of the heat source machine (2) calculated on a basis of the first temperature, the second temperature, and an outside air temperature, and estimating a flow rate of hot water supplied from the hot water storage tank (3), from the inflow rate and a change in a hot water storage amount of the hot water storage tank (3),
deriving a function for obtaining an actually measured value of the flow rate of hot water, from the estimated value of the flow rate of hot water estimated by the flow rate estimating step, and
correcting the estimated value of the flow rate of hot water estimated by the flow rate estimating step, on a basis of the function, **characterized in that**
the correcting step creates a scatter graph on the basis of the estimated values and the actually measured values of the flow rate of hot water recorded in a storage unit (14) that stores the estimated value of the flow rate of hot water and the actual measured value of the flow rate of hot water in association with each other, calculates a first function for calculating the estimated value from the actual value based on the scatter graph, and derives an inverse function of the first function as the function.

10. A program for causing a computer (900) to execute processing of estimating a flow rate of hot water supplied from a hot water supply system (1) including a heat source machine (2) and a hot water storage tank (3) that stores hot water created by the heat source machine (2), the processing comprising:
estimating an inflow rate of hot water to the hot water storage tank (3), from a first temperature that is a temperature of water flowing into the heat source machine (2), a second temperature that is a temperature of hot water supplied from the heat source machine (2) to the hot water storage tank (3), and a heating capacity of the heat source machine (2) calculated on a basis of the first temperature, the second temperature, and an outside air temperature, and estimating a flow rate of hot water supplied from the hot water storage tank (3), from the inflow rate and a change in a hot water storage amount of the hot water storage tank (3),
deriving a function for obtaining an actually measured value of the flow rate of hot water, from the estimated value of the flow rate of hot water estimated by the flow rate estimating step, and
correcting the estimated value of the flow rate of hot water estimated by the flow rate estimating step, on a basis of the function, **characterized in that**
the correcting step creates a scatter graph on the basis of the estimated values and the actually measured values of the flow rate of hot water recorded in a storage unit (14) that stores the estimated value of the flow rate of hot water and the actual measured value of the flow rate of hot water in association with each other, calculates a first function for calculating the estimated value from the actual value based on the scatter graph, and derives an inverse function of the first function as the function.

## Patentansprüche

1. Flussratenschätzungsvorrichtung (10), die eine Flussrate von Warmwasser schätzt, das von einem Warmwasserzufuhrsystem (1) zugeführt wird, das eine Wärmequellenmaschine (2) und einen Warmwasserspeichertank (3), der von der Wärmequellenmaschine (2) erzeugtes Warmwasser speichert, beinhaltet, die Flussratenschätzungsvorrichtung (10) umfassend:
eine Flussratenschätzungseinheit (12), die konfiguriert ist, um eine Zuflussrate von Warmwasser in den Warmwasserspeichertank (3) anhand einer ersten Temperatur, die eine Temperatur von Wasser ist, das in die Wärmequellenmaschine (2) fließt, einer zweiten Temperatur, die eine Temperatur von Warmwasser ist, das von der Wärmequellenmaschine (2) zum Warmwasserspeichertank (3) zugeführt wird, und einer Heizleistung der Wärmequellenmaschine (2) berechnet basierend auf der ersten Temperatur, der zweiten Temperatur und einer Außentemperatur zu schätzen, und um die Flussrate von Warmwasser zu schätzen, das aus dem Warmwasserspeichertank (3) zugeführt wird, anhand der Zuflussrate und einer Änderung einer Warmwasserspeichermenge des Warmwasserspeichertanks (3),
eine Korrektureinheit (15), die konfiguriert ist, um eine Funktion abzuleiten, um einen gemessenen Ist-Wert der Flussrate von Warmwasser anhand des von der Flussratenschätzungseinheit (12) geschätzten Werts der Flussrate von Warmwasser zu erlangen, und den von der Flussratenschätzungseinheit (12) geschätzten Wert der Flussrate von Warmwasser basierend auf der Funktion zu korrigieren, und
eine Speichereinheit (14), die konfiguriert ist, um den geschätzten Wert der Flussrate von Warmwasser und den gemessenen Ist-Wert der Flussrate von Warmwasser miteinander assoziiert zu speichern, **dadurch gekennzeichnet, dass**
die Korrektureinheit (15) konfiguriert ist, um ein Streudiagramm basierend auf den in der Speichereinheit (14) aufgezeichneten geschätzten Werten und gemessenen Ist-Werten der Flussrate von Warmwasser zu erstellen, um eine erste Funktion des geschätzten Wertes anhand des Ist-Werts basierend auf dem Streudiagramm zu berechnen und eine Umkehrfunktion der ersten Funktion als die Funktion abzuleiten.

2. Flussratenschätzungsvorrichtung (10) nach Anspruch 1, ferner umfassend:
eine Auswahleinheit, die konfiguriert ist, um aus unter Eigenschaftsinformationen enthaltenen Funktionen, die für andere Warmwasserzufuhrsysteme als das als Bewertungseinheit betrachtete Warmwasserzufuhrsystem (1) berechnet wurden, und aus Merkmalsinformationen der anderen Warmwasserzufuhrsysteme, jene anderen Warmwasserzufuhrsysteme auszuwählen, die ähnliche Merkmalsinformationen wie das als Bewertungseinheit betrachtete Warmwasserzufuhrsystem (1) aufweisen,
wobei die Korrektureinheit den geschätzten Wert der Flussrate von Warmwasser in dem als Bewertungseinheit betrachteten Warmwasserzufuhrsystem (1) basierend auf der für die von der Auswahleinheit ausgewählten anderen Warmwasserzufuhrsysteme abgeleiteten Funktion zu korrigieren, wobei der geschätzte Wert von der Flussratenschätzungseinheit (12) geschätzt wird.

3. Flussratenschätzungsvorrichtung (10) nach Anspruch 2,
wobei die Auswahleinheit einen Ähnlichkeitsgrad zwischen den Merkmalsinformationen der anderen Warmwasserzufuhrsysteme und den Merkmalsinformationen des als Bewertungseinheit betrachteten Warmwasserzufuhrsystems (1) berechnet, und
die Korrektureinheit den von der Flussratenschätzungseinheit (12) geschätzten Wert der Flussrate von Warmwasser korrigiert, indem sie eine Gewichtung gemäß dem Ähnlichkeitsgrad an der für die von der Auswahleinheit ausgewählten anderen Warmwasserzufuhrsysteme abgeleitete Funktion durchführt.

4. Flussratenschätzungsvorrichtung (10) nach Anspruch 2 oder 3,
wobei die Korrektureinheit den von der Flussratenschätzungseinheit (12) geschätzten Wert der Flussrate von Warmwasser korrigiert, indem sie eine Gewichtung gemäß den Anzahlen des geschätzten Werts der Flussrate und des gemessenen Ist-Werts der Flussrate durchführt, die zur Ableitung der in den Eigenschaftsinformationen beinhalteten Funktion verwendet werden.

5. Flussratenschätzungsvorrichtung (10) nach einem der Ansprüche 1 bis 4, ferner umfassend:
eine Flussratenberechnungseinheit, die konfiguriert ist, um einen gewichteten Mittelwert des von der Flussratenschätzungseinheit (12) geschätzten Werts der Flussrate von Warmwasser und eines gemessenen Ist-Werts der Flussrate von Warmwasser als Flussrate von Warmwasser zu berechnen.

6. Flussratenschätzungsvorrichtung (10) nach einem der Ansprüche 1 bis 4, ferner umfassend:
eine Flussratenberechnungseinheit, die konfiguriert ist, um einen gewichteten Mittelwert des von der Korrektureinheit korrigierten geschätzten Werts der Flussrate von Warmwasser und des gemessenen Ist-Werts der Flussrate von Warmwasser als Flussrate von Warmwasser zu berechnen.

7. Flussratenschätzungsvorrichtung (10) nach einem der Ansprüche 1 bis 6, ferner umfassend:
eine Anormalitätserkennungseinheit, die konfiguriert ist, um eine Anormalität eines Sensors, der einen gemessenen Ist-Wert der Flussrate von Warmwasser misst, basierend auf einer Differenz zwischen dem von der Flussratenschätzungseinheit (12) geschätzten Wert der Flussrate von Warmwasser und dem gemessenen Ist-Wert zu erkennen.

8. Flussratenschätzungsvorrichtung (10) nach einem der Ansprüche 1 bis 6, ferner umfassend:
eine Flussratenberechnungseinheit, die konfiguriert ist, um einen gewichteten Mittelwert des von der Flussratenschätzungseinheit (12) geschätzten Werts der Flussrate von Warmwasser und eines gemessenen Ist-Werts der Flussrate von Warmwasser als Flussrate von Warmwasser zu berechnen; und
eine Anormalitätserkennungseinheit, die konfiguriert ist, um eine Anormalität eines Sensors, der den gemessenen Ist-Wert misst, basierend auf einer Differenz zwischen dem geschätzten Wert und dem gemessenen Ist-Wert zu erkennen,
wobei im Fall, dass die Anormalitätserkennungseinheit eine Anormalität erkennt, die Flussratenberechnungseinheit die Gewichtung für den geschätzten Wert größer als zuvor setzt.

9. Flussratenschätzungsverfahren zum Schätzen einer Flussrate von Warmwasser, das von einem Warmwasserzufuhrsystem (1) zugeführt wird, das eine Wärmequellenmaschine (2) und einen Warmwasserspeichertank (3), der von der Wärmequellenmaschine (2) erzeugtes Warmwasser speichert, beinhaltet, das Flussratenschätzungsverfahren umfassend:
Schätzen einer Zuflussrate von Warmwasser in den Warmwasserspeichertank (3) anhand einer ersten Temperatur, die eine Temperatur von Wasser ist, das in die Wärmequellenmaschine (2) fließt, einer zweiten Temperatur, die eine Temperatur von Warmwasser ist, das von der Wärmequellenmaschine (2) zu dem Warmwasserspeichertank (3) zugeführt wird, und einer Heizleistung der Wärmequellenmaschine (2) berechnet basierend auf der ersten Temperatur, der zweiten Temperatur und einer Außentemperatur, und Schätzen der Flussrate von Warmwasser, das aus dem Warmwasserspeichertank (3) zugeführt wird, anhand der Zuflussrate und einer Änderung einer Warmwasserspeichermenge des Warmwasserspeichertanks (3),
Ableiten einer Funktion zum Erlangen eines gemessenen Ist-Werts der Flussrate von Warmwasser anhand des durch den Flussratenschätzungsschritt geschätzten Werts der Flussrate von Warmwasser, und
Korrigieren des durch den Flussratenschätzungsschritt geschätzten Werts der Flussrate von Warmwasser basierend auf der Funktion, **dadurch gekennzeichnet, dass**
der Korrekturschritt ein Streudiagramm basierend auf den geschätzten Werten und den gemessenen Ist-Werten der Durchflussrate von Warmwasser erstellt, die in einer Speichereinheit (14) aufgezeichnet sind, die den geschätzten Wert der Durchflussrate von Warmwasser und den gemessenen Ist-Wert der Durchflussrate von Warmwasser miteinander assoziiert speichert, eine erste Funktion zum Berechnen des geschätzten Werts anhand des Ist-Werts basierend auf dem Streudiagramm berechnet und eine Umkehrfunktion der ersten Funktion als die Funktion ableitet.

10. Programm, um einen Computer (900) zu veranlassen, ein Verarbeiten eines Schätzens einer Durchflussrate von Warmwasser auszuführen, das von einem Warmwasserzufuhrsystem (1) zugeführt wird, das eine Wärmequellenmaschine (2) und einen Warmwasserspeicher (3), der von der Wärmequellenmaschine (2) erzeugtes Warmwasser speichert, beinhaltet, wobei die Verarbeitung Folgendes umfasst:
Schätzen einer Zuflussrate von Warmwasser in den Warmwasserspeichertank (3) anhand einer ersten Temperatur, die eine Temperatur von Wasser ist, das in die Wärmequellenmaschine (2) fließt, einer zweiten Temperatur, die eine Temperatur von Warmwasser ist, das von der Wärmequellenmaschine (2) zu dem Warmwasserspeichertank (3) zugeführt wird, und einer Heizleistung der Wärmequellenmaschine (2) berechnet basierend auf der ersten Temperatur, der zweiten Temperatur und einer Außentemperatur, und Schätzen der Flussrate von Warmwasser, das aus dem Warmwasserspeichertank (3) zugeführt wird, anhand der Zuflussrate und einer Änderung einer Warmwasserspeichermenge des Warmwasserspeichertanks (3),
Ableiten einer Funktion zum Erlangen eines gemessenen Ist-Werts der Flussrate von Warmwasser anhand des durch den Flussratenschätzungsschritt geschätzten Werts der Flussrate von Warmwasser, und
Korrigieren des durch den Flussratenschätzungsschritt geschätzten Werts der Flussrate von Warmwasser basierend auf der Funktion, **dadurch gekennzeichnet, dass**
der Korrekturschritt ein Streudiagramm basierend auf den geschätzten Werten und den gemessenen Ist-Werten der Durchflussrate von Warmwasser erstellt, die in einer Speichereinheit (14) aufgezeichnet sind, die den geschätzten Wert der Durchflussrate von Warmwasser und den gemessenen Ist-Wert der Durchflussrate von Warmwasser miteinander assoziiert speichert, eine erste Funktion zum Berechnen des geschätzten Werts anhand des Ist-Werts basierend auf dem Streudiagramm berechnet und eine Umkehrfunktion der ersten Funktion als die Funktion ableitet.

## Revendications

1. Dispositif d'estimation de débit (10) qui estime un débit d'eau chaude fournie à partir d'un système d'alimentation en eau chaude (1) comprenant une machine de source de chaleur (2) et un réservoir de stockage d'eau chaude (3) qui stocke l'eau chaude produite par la machine de source de chaleur (2), le dispositif d'estimation de débit (10) comprenant :
une unité d'estimation de débit (12) configurée pour estimer un débit d'entrée d'eau chaude dans le réservoir de stockage d'eau chaude (3), à partir d'une première température qui est une température de l'eau entrant dans la machine de source de chaleur (2), d'une deuxième température qui est une température de l'eau chaude fournie de la machine de source de chaleur (2) au réservoir de stockage d'eau chaude (3), et d'une capacité de chauffage de la machine de source de chaleur (2), calculée sur la base de la première température, de la deuxième température et d'une température de l'air extérieur, et pour estimer un débit d'eau chaude fournie à partir du réservoir de stockage d'eau chaude (3), à partir du débit d'entrée et d'une variation de la quantité de stockage d'eau chaude dans le réservoir de stockage d'eau chaude (3),
une unité de correction (15) configurée pour dériver une fonction permettant d'obtenir une valeur réellement mesurée du débit d'eau chaude, à partir de la valeur estimée du débit d'eau chaude estimé par l'unité d'estimation de débit (12), et pour corriger la valeur estimée du débit d'eau chaude estimé par l'unité d'estimation de débit (12), sur la base de la fonction, et
une unité de stockage (14) configurée pour stocker la valeur estimée du débit d'eau chaude et la valeur réellement mesurée du débit d'eau chaude en association l'une avec l'autre, **caractérisé en ce que**
l'unité de correction (15) est configurée pour créer un nuage de points sur la base des valeurs estimées et des valeurs réellement mesurées du débit d'eau chaude enregistrées dans l'unité de stockage (14), pour calculer une première fonction permettant de calculer la valeur estimée à partir de la valeur réelle sur la base du nuage de points, et pour dériver une fonction inverse de la première fonction en tant que fonction.

2. Dispositif d'estimation de débit (10) selon la revendication 1, comprenant en outre :
une unité de sélection configurée pour sélectionner, parmi des informations de propriété comprenant la fonction calculée pour d'autres systèmes d'alimentation en eau chaude distincts du système d'alimentation en eau chaude (1) en tant que cible d'évaluation et des informations caractéristiques des autres systèmes d'alimentation en eau chaude, les autres systèmes d'alimentation en eau chaude présentant des informations caractéristiques similaires à celles du système d'alimentation en eau chaude (1) en tant que cible d'évaluation,
dans lequel l'unité de correction corrige la valeur estimée du débit d'eau chaude dans le système d'alimentation en eau chaude (1) en tant que cible d'évaluation, sur la base de la fonction dérivée pour les autres systèmes d'alimentation en eau chaude sélectionnés par l'unité de sélection, la valeur estimée étant estimée par l'unité d'estimation de débit (12).

3. Dispositif d'estimation de débit (10) selon la revendication 2,
dans lequel l'unité de sélection calcule un degré de similarité entre les informations caractéristiques des autres systèmes d'alimentation en eau chaude et les informations caractéristiques du système d'alimentation en eau chaude (1) en tant que cible d'évaluation, et
l'unité de correction corrige la valeur estimée du débit d'eau chaude estimé par l'unité d'estimation de débit (12) en effectuant une pondération en fonction du degré de similarité sur la fonction dérivée pour les autres systèmes d'alimentation en eau chaude sélectionnés par l'unité de sélection.

4. Dispositif d'estimation de débit (10) selon la revendication 2 ou 3, dans lequel l'unité de correction corrige la valeur estimée du débit d'eau chaude estimé par l'unité d'estimation de débit (12) en effectuant une pondération en fonction des nombres de la valeur estimée du débit et de la valeur réellement mesurée du débit qui sont utilisés pour dériver la fonction incluse dans les informations de propriété.

5. Dispositif d'estimation de débit (10) selon l'une quelconque des revendications 1 à 4, comprenant en outre :
une unité de calcul de débit configurée pour calculer une moyenne pondérée de la valeur estimée du débit d'eau chaude estimé par l'unité d'estimation de débit (12) et d'une valeur réellement mesurée du débit d'eau chaude, en tant que débit d'eau chaude.

6. Dispositif d'estimation de débit (10) selon l'une quelconque des revendications 1 à 4, comprenant en outre :
une unité de calcul de débit configurée pour calculer une moyenne pondérée de la valeur estimée corrigée du débit d'eau chaude corrigée par l'unité de correction et de la valeur réellement mesurée du débit d'eau chaude, en tant que débit d'eau chaude.

7. Dispositif d'estimation de débit (10) selon l'une quelconque des revendications 1 à 6, comprenant en outre :
une unité de détection d'anomalie configurée pour détecter une anomalie d'un capteur qui mesure une valeur réellement mesurée du débit d'eau chaude, sur la base d'une différence entre la valeur estimée du débit d'eau chaude estimé par l'unité d'estimation de débit (12) et la valeur réellement mesurée.

8. Dispositif d'estimation de débit (10) selon l'une quelconque des revendications 1 à 6, comprenant en outre :
une unité de calcul de débit configurée pour calculer une moyenne pondérée de la valeur estimée du débit d'eau chaude estimé par l'unité d'estimation de débit (12) et d'une valeur réellement mesurée du débit d'eau chaude, en tant que débit d'eau chaude ; et
une unité de détection d'anomalie configurée pour détecter une anomalie d'un capteur qui mesure la valeur réellement mesurée, sur la base d'une différence entre la valeur estimée et la valeur réellement mesurée,
dans lequel, dans le cas où l'unité de détection d'anomalie détecte une anomalie, l'unité de calcul de débit règle la pondération de la valeur estimée pour qu'elle soit supérieure à celle d'avant.

9. Procédé d'estimation de débit permettant d'estimer un débit d'eau chaude fournie à partir d'un système d'alimentation en eau chaude (1) comprenant une machine de source de chaleur (2) et un réservoir de stockage d'eau chaude (3) qui stocke l'eau chaude produite par la machine de source de chaleur (2), le procédé d'estimation de débit comprenant :
l'estimation d'un débit d'entrée d'eau chaude dans le réservoir de stockage d'eau chaude (3), à partir d'une première température qui est une température de l'eau entrant dans la machine de source de chaleur (2), d'une deuxième température qui est une température de l'eau chaude fournie de la machine de source de chaleur (2) au réservoir de stockage d'eau chaude (3), et d'une capacité de chauffage de la machine de source de chaleur (2) calculée sur la base de la première température, de la deuxième température et d'une température de l'air extérieur, et l'estimation d'un débit d'eau chaude fournie à partir du réservoir de stockage d'eau chaude (3), à partir du débit d'entrée et d'une variation de la quantité de stockage d'eau chaude dans le réservoir de stockage d'eau chaude (3),
la dérivation d'une fonction permettant d'obtenir une valeur réellement mesurée du débit d'eau chaude, à partir de la valeur estimée du débit d'eau chaude estimé par l'étape d'estimation de débit, et
la correction de la valeur estimée du débit d'eau chaude estimé par l'étape d'estimation de débit, sur la base de la fonction, **caractérisé en ce que**
l'étape de correction crée un nuage de points sur la base des valeurs estimées et des valeurs réellement mesurées du débit d'eau chaude enregistrées dans une unité de stockage (14) qui stocke la valeur estimée du débit d'eau chaude et la valeur réellement mesurée du débit d'eau chaude en association l'une avec l'autre, calcule une première fonction permettant de calculer la valeur estimée à partir de la valeur réelle sur la base du nuage de points, et dérive une fonction inverse de la première fonction en tant que fonction.

10. Programme destiné à amener un ordinateur (900) à exécuter un traitement d'estimation d'un débit d'eau chaude fournie par un système d'alimentation en eau chaude (1) comprenant une machine de source de chaleur (2) et un réservoir de stockage d'eau chaude (3) qui stocke l'eau chaude produite par la machine de source de chaleur (2), ledit traitement comprenant :
l'estimation d'un débit d'entrée d'eau chaude dans le réservoir de stockage d'eau chaude (3), à partir d'une première température qui est la température de l'eau entrant dans la machine de source de chaleur (2), d'une deuxième température qui est la température de l'eau chaude fournie de la machine de source de chaleur (2) au réservoir de stockage d'eau chaude (3), et d'une capacité de chauffage de la machine de source de chaleur (2) calculée sur la base de la première température, de la deuxième température et d'une température de l'air extérieur, et l'estimation d'un débit d'eau chaude fournie par le réservoir de stockage d'eau chaude (3), à partir du débit d'entrée et d'une variation d'une quantité de stockage d'eau chaude du réservoir de stockage d'eau chaude (3),
la dérivation d'une fonction permettant d'obtenir une valeur réellement mesurée du débit d'eau chaude, à partir de la valeur estimée du débit d'eau chaude estimé par l'étape d'estimation de débit, et
la correction de la valeur estimée du débit d'eau chaude estimé par l'étape d'estimation de débit, sur la base de la fonction, **caractérisé en ce que**
l'étape de correction crée un nuage de points sur la base des valeurs estimées et des valeurs réellement mesurées du débit d'eau chaude enregistrées dans une unité de stockage (14) qui stocke la valeur estimée du débit d'eau chaude et la valeur réellement mesurée du débit d'eau chaude en association l'une avec l'autre, calcule une première fonction permettant de calculer la valeur estimée à partir de la valeur réelle sur la base du nuage de points, et dérive une fonction inverse de la première fonction en tant que fonction.
